# EUROPEAN PATENT SPECIFICATION

(11) **EP 4 484 833 B1**
(45) Date of publication and mention of the grant of the patent: **22.10.2025**
(21) Application number: 23181736.2
(22) Date of filing: 27.06.2023
(51) Int. Cl.: F24D 19/10, F16B 41/00, G05D 23/02, F16B 7/18, F16B 21/07

(54) **AN ADAPTER FOR ATTACHING A CONTROL DEVICE TO A VALVE ARRANGEMENT**
ADAPTER ZUR BEFESTIGUNG EINER STEUERUNGSVORRICHTUNG AN EINER VENTILANORDNUNG
ADAPTATEUR POUR FIXER UN DISPOSITIF DE COMMANDE À UN AGENCEMENT DE SOUPAPE

(43) Date of publication of application: 01.01.2025
(73) Proprietor: IMI Hydronic Engineering International SA, 1262 Eysins (CH)
(72) Inventor: PERSCHK, Benjamin, 59555 Lippstadt (DE); ASCHENBRENNER, Wilhelm, 59609 Anröchte (DE)
(74) Representative: Zacco Sweden AB

(56) References cited:
- EP-A1- 1 667 006
- EP-B1- 0 504 582
- EP-B1- 0 903 544
- EP-B1- 1 388 715
- DE-U1- 202004 008 798
- GB-A- 2 570 928

## Description

### TECHNICAL FIELD

The present invention relates to an adapter for attaching a control device to a valve arrangement, a kit comprising the adapter and the control device, a valve assembly comprising the kit and the valve arrangement, and a fluid distribution system comprising the valve assembly.

### BACKGROUND

A thermostatic radiator valve assembly provides a self-regulating control of fluid flow to a radiator. The thermostatic radiator valve assembly allows the temperature of a room to be controlled by changing the flow of hot water to the radiator. The thermostatic radiator valve assembly comprises a radiator valve arrangement and a thermostatic control device attached to radiator valve arrangement. The thermostatic control device may also be called a thermostatic head. The radiator valve arrangement is provided with a valve comprising a valve spindle that allows controlling an opening degree of the valve, where the opening degree of the valve controls the fluid flow through the valve arrangement. The thermostatic control device is attached to radiator valve arrangement such that the valve spindle of the valve arrangement is actuable by the thermostatic control device.

In particular, the thermostatic control device comprises a thermal actuator configured to actuate the valve spindle in dependence of an ambient temperature around the thermostatic control device. The thermal actuator comprises an actuator body, an expandable material element (typically made of liquid or gas) expandable inside the actuator body in dependence of the ambient temperature, and an actuator piston connected to the valve spindle and coupled to the expandable material element such that the actuator piston moves away from the actuator body when the expandable material element expands.

As the ambient temperature increases, the valve will gradually close by means of the expandable material element expanding, which moves the piston, which in turn moves the valve spindle. As a consequence, the amount of hot water entering the radiator is reduced as the ambient temperature increases. This enables setting a maximum temperature for a room. The thermostatic control device is typically a separate part from the radiator valve arrangement. During installment of the thermostatic radiator valve assembly, the thermostatic control device is attached to radiator valve arrangement such that the valve spindle of the radiator valve arrangement is connected to and controllable (i.e. actuable) by the thermostatic control device.

One way of way of attaching the thermostatic control device to the radiator valve arrangement is using a snap-fit connection. A problem with snap-fit connections is that such connections provide limited retention force, i.e., the force required to disengage the thermostatic control device from the radiator valve arrangement after the snap-fit connection has been formed. A limited retention force may cause unintentional disconnections of the thermostatic control device from the radiator valve arrangement. An unintentional disconnection may, e.g., happen if a person accidentally bumps into the thermostatic control device when it is attached to the radiator valve arrangement.

An example of an adapter for attaching a control device to a valve according to the preamble of claim 1 is known from document GB 2 570 928 A.

Even if known thermostatic radiator valve assemblies work well for their intended use, there is room for improved ways of attaching the thermostatic control device to the radiator valve arrangement via a snap-fit connection.

In general, there is a need for improved ways of attaching general control devices, that not necessarily are thermostatic, to general valve arrangements, that not necessarily are for radiators, via a snap-fit connection such that a valve spindle of the valve arrangement is connected to and controllable by the control device.

### SUMMARY

An object of the present invention is to provide an adapter for attaching a control device to a valve arrangement that provides an improved attachment of the control device to the valve arrangement. This and other objects, which will become apparent in the following, are accomplished by an adapter, a kit comprising the adapter and a control device, a valve assembly comprising the kit and a valve arrangement, and a fluid distribution system comprising the valve assembly, as defined in the accompanying independent claims. According to a first aspect of the present invention, there is provided an adapter for attaching a control device to a valve arrangement such that a valve spindle of the valve arrangement is connected to and controllable by the control device. The adapter comprises a tubular shape extending in an axial direction. A first axial end portion of the adapter is configured to engage with the valve arrangement via a snap-fit connection, and a second axial end portion of the adapter is configured to engage with the control device via a threaded connection.

The snap-fit connection is formed by a first interlocking part provided on an inside of the adapter engaging a second interlocking part of the valve arrangement such that the adapter is retained to the valve arrangement. The first interlocking part is movable in a resilient manner in a radial direction such that, when the adapter becomes engaged with the valve arrangement, the first interlocking part expands in the radial direction and thereafter snaps back in the radial direction to form the snap-fit connection.

The adapter is provided with male threads arranged circumferentially with respect to the axial direction. The threaded connection is formed by the male threads engaging female threads of the control device such that the adapter is retained to the control device.

The male threads are tapered towards the second end portion of the adapter to enable the first interlocking part to become pressed inwards in the radial direction when the adapter becomes engaged with the control device via the threaded connection and thereby preventing the first interlocking part from expanding in the radial direction when the adapter is engaged with the control device via the threaded connection.

The adapter enables connecting a control device with a threaded interface to a valve arrangement with a snap-fit interface.

The male threads are configured to increase a retention force of the snap-fit connection when the adapter is engaged with both the control device and the valve arrangement as compared with when the adapter is engaged with the valve arrangement but not the control device. The first interlocking part resists expanding in the radial direction at all times due the first interlocking part being movable in a resilient manner in the radial direction. Consequently, the snap-fit connection presents some retention force when the adapter is engaged with the valve arrangement but not the control device. By preventing the first interlocking part from expanding in the radial direction when the adapter is engaged with the control device via the threaded connection, the retention force of the snap-fit connection is increased.

Preventing the first interlocking part from expanding in the radial direction when the adapter is engaged with the control device via the threaded connection may mean, in some embodiments, that the first interlocking part cannot expand by any amount at all. In other embodiments, preventing the first interlocking part from expanding in the radial direction when the adapter is engaged with the control device via the threaded connection may mean that the amount the interlocking part can expand (for example due to a person trying to pull the adapter from the valve arrangement) is significantly reduced (such as ten times) as compared with when the adapter is engaged with the valve arrangement but not the control device.

The female threads preferably are straight threads or tapered less than the male threads. Since the male threads are tapered, an end portion of the female threads will exert a force radially inwards onto the male threads when engaged with the male threads. This force becomes larger the further the female threads are engaged with the male threads, i.e., how many turns the female threads has engaged with the male threads.

According to a least one exemplary embodiment, the male threads are configured to at least double the retention force of the snap-fit connection when the adapter is engaged with both the control device and the valve arrangement as compared with when the adapter is engaged with the valve arrangement but not the control device.

Retention force refers to the force required to disengage the first interlocking part from the second interlocking part after the snap-fit connection has been formed. The increased retention force prevents unintentional disconnections of the control device from the valve arrangement.

The retention force is increased without increasing the mating force. Mating force refers to the force required to engage the first interlocking part to the second interlocking to form the snap-fit connection. Thus, the adapter provides a more secure attachment of the control device to the valve arrangement without making the attachment process more difficult.

The adapter achieves the increased retention force without separate and additional components, as compared to, e.g., an adjustable clamping ring with a screw. Consequently, manufacturing and handling of the adapter is simplified compared to other solutions requiring additional components. Furthermore, the adapter achieves the increased retention force without requiring additional actions when attaching the control device to the valve arrangement, as compared to, e.g., screwing the screw of the adjustable clamping ring. Consequently, the adapter facilitates attaching the control device to the valve arrangement.

The control device may be a thermostatic control device. However, the control device may be other types of control devices as well, which are provided with other means of actuating the valve spindle, such as an electrical actuator or a manually rotatable handle. The electrical actuator, the manually rotatable handle, and other actuating means may be comprised as additional means of actuating the valve spindle in a thermostatic control device.

The valve arrangement may be a radiator valve arrangement. However, the valve arrangement may be other types of valve arrangements as well, such as a control valve arrangement.

The valve spindle of the valve arrangement may also be called an actuating spindle or a shaft.

The valve arrangement may comprises a valve inlet and a valve outlet provided on a valve body. The valve arrangement may further comprises valve comprising a seat and closing member movable relative to the seat for enabling a variable cross section of a passage between the valve inlet and the valve outlet to be changed. The valve outlet is arranged downstream of the valve inlet. The valve arrangement is arranged to control a fluid flow between the valve inlet and the valve outlet. The control of fluid flow is provided by the valve, which may, e.g., be a linear valve or a rotary valve. Other types of valves are also possible. The valve spindle may be connected to the closing member. In that case, the position of the valve spindle relative to the valve body determines the opening size of the valve via the closing member. In other words, a position of the valve spindle relative to a valve body of the valve arrangement determines an opening size of a valve of the valve arrangement

If the valve is a linear valve, the closing member may move between different positions relative to the seat such that the variable cross section of the passage between the valve inlet and the valve outlet is changed. In other words, as the closing member moves closer to the seat, the amount of fluid flowing through the valve arrangement decreases. As the closing member moves away from the seat, the amount of fluid flowing through the valve arrangement increases. The closing member may be movable the axial direction. As mentioned, the closing member may be connected to the valve spindle. The valve spindle may be actuated in a linear direction along the axial direction. Furthermore, the valve spindle may extend along the axial direction.

The closing member may have a position in which the valve is considered as fully open, i.e. providing for a largest defined opening area through the valve arrangement. Similarly, the closing member may have a position in which the valve is considered as fully closed, i.e. completely blocking fluid from flowing through the valve arrangement. The opening degree of the valve may be controlled in a step-less manner. However, the opening degree may be discretely controlled in steps between the fully closed position and the fully opened position.

A tubular shape means an elongated shape like a tube. Such a shape is typically round and hollow. The adapter may have the shape of a cylinder. Alternatively, the adapter may have a shape of a cylinder with a slit extending from one opening to the other opening. In that case, the cylinder does not form a solid circle when looking into the cylinder from one of the openings.

The first and the second axial end portions are portions at respective ends of the elongated shape of the adapter, e.g., at respective outmost portions of the adapter or in connection to the respective outermost portions of the adapter. The first axial end portion being configured to engage with the valve arrangement via a snap-fit connection and the second axial end portion being configured to engage with the control device via a threaded connection means that the adapter is configured such that the control device is attachable to one end, or in the vicinity of the one end, of the adapter, and that the valve arrangement is attachable to an opposite end, or in the vicinity of the opposite end, of the adapter.

The first interlocking part and a second interlocking part are preferably complementary in shape. For example, the first interlocking part may comprise a protrusion arranged to engage a recess forming the second interlocking part, or vice versa. The first interlocking part may comprise a combination of one or more protrusions and one or more recesses configured to engage a complementary shape of the second interlocking part.

When the first interlocking part is engaged with the second interlocking part in the snap-fit connection, the adapter is retained to the valve arrangement. This means that the adapter is attached and held to the valve arrangement.

As mentioned, the first interlocking part is movable in a resilient manner in the radial direction. The radial direction is perpendicular, or substantially perpendicular, to the axial direction.

The adapter, or at least a part of the adapter, may be made of a resilient material such that when the adapter becomes engaged with the valve arrangement, the first interlocking part expands in the radial direction and thereafter snaps back in the radial direction to form the snap-fit connection. In other words, the first interlocking part is resilient. Examples, of suitable materials are plastics or metal.

Alternatively, or in combination of, the resilience of the first interlocking part may be formed at least partly mechanically, i.e., by the particular shape of the adapter. According to a least one exemplary embodiment, the first interlocking part is arranged on a protruding portion of the adapter extending in the axial direction configured to provide resilience to the first interlocking part in the radial direction.

According to a least one exemplary embodiment, the adapter is provided with a slit extending between the first axial end portion of the adapter and the second end portion of the adapter to provide resilience to the first interlocking part in the radial direction. This slit is arranged extending all the way from one end to the other end. This slit is arranged such that it reduces the genus of the adapter by one as compared with the same adapter without the slit. For example, if the adapter without the slit is a cylinder with one through hole, the slit is arranged such that the adapter becomes a shape with zero through holes. Such arrangement of the slit provides resilience of the whole adapter, i.e., the whole adapter can compress and expand radially in a resilient manner. Consequently, resilience is also provided to the first interlocking part in the radial direction. The adapter may additionally, or alternatively, comprise slits not extending all the way from one end to the other of the adapter, which also provide resilience to some extent.

As mentioned, the adapter is provided with male threads arranged circumferentially with respect to the axial direction. For example, if the adapter is a cylinder, the male threads may extend circumferentially around an outside of that cylinder.

When the male threads are engaged with the female threads in the threaded connection, the adapter is retained to the control device. This means that the adapter is attached and held to the control device.

According to a least one exemplary embodiment, the adapter is provided with a ridge arranged circumferentially with respect to the axial direction on an outside of the adapter. The ridge comprises a surface arranged to abut an end of the control device when the adapter becomes engaged with the control device via the threaded connection.

According to a least one exemplary embodiment, the surface is frustoconical pointing towards the first axial end portion of the adapter and is associated with an apex angle, and wherein the ridge is arranged such that the apex angle expands when the adapter becomes engaged with the control device via the threaded connection. In this way, the end of the control device will push the surface of the ridge such that first interlocking part is pressed inwards in the radial direction when the adapter becomes engaged with the control device via the threaded connection. Consequently, the retention force of the snap-fit connection when the adapter is engaged with both the control device and the valve arrangement is further increased as compared with when the adapter is engaged with the valve arrangement but not the control device.

According to a least one exemplary embodiment, the adapter comprises a first anti-rotational part provided on the inside of the adapter configured to engage a second anti-rotational part of the valve arrangement such that the adapter is rotationally locked to the valve arrangement when the adapter is engaged with the valve arrangement via the snap-fit connection. The control device is rotationally locked to the adapter via the threaded connection when it is attached to the adapter. The first anti-rotational part makes the control device rotationally locked to the valve arrangement when the control device is attached to the valve arrangement via the adapter. Note that the control device may comprise a first part and a second part, where the first part is rotationally locked to the adapter via the threaded connection when the control device is attached to the adapter, and where the second part is rotatably attached to the first part.

According to a second aspect of the present invention, there is provided a kit. The kit is associated with the above-discussed advantages. The kit comprises a control device and an adapter for attaching the control device to a valve arrangement such that a valve spindle of the valve arrangement is connected to and controllable by the control device. The control device comprises regulating means configured to control the valve spindle when the control device is attached to the valve arrangement via the adapter.

The adapter comprises a tubular shape extending in an axial direction. A first axial end portion of the adapter is configured to engage with the valve arrangement via a snap-fit connection, and a second axial end portion of the adapter is configured to engage with the control device via a threaded connection.

The snap-fit connection is formed by a first interlocking part provided on an inside of the adapter engaging a second interlocking part of the valve arrangement such that the adapter is retained to the valve arrangement. The first interlocking part is movable in a resilient manner in a radial direction such that, when the adapter becomes engaged with the valve arrangement, the first interlocking part expands in the radial direction and thereafter snaps back in the radial direction to form the snap-fit connection.

The adapter is provided with male threads arranged circumferentially with respect to the axial direction. The threaded connection is formed by the male threads engaging female threads of the control device such that the adapter is retained to the control device.

The male threads and/or the female threads are tapered with respect to the axial direction. The male threads are configured to engage the female threads of the control device such that the first interlocking part is pressed inwards in the radial direction when the adapter becomes engaged with the control device via the threaded connection and thereby preventing the first interlocking part from expanding in the radial direction when the adapter is engaged with the control device via the threaded connection.

According to a least one exemplary embodiment, one the male threads and the female threads are tapered, and the other one of the male threads and female threads are straight threads. According to a least one exemplary embodiment, the adapter of the kit is the adapter according to the first aspect of the present invention. In that case, the male threads are tapered towards the second axial end portion of the adapter. The female threads are preferably in that case straight threads or tapered less than the male threads. Since the male threads are tapered, an end portion of the female threads will exert a force radially inwards onto the male threads when engaged with the male threads. This force becomes larger the further the female threads are engaged with the male threads, i.e., how many turns the female threads has engaged with the male threads.

In another embodiment, the female threads are tapered such that an end portion of the female threads, which is the portion arranged to first engage the male threads as the control device engages the adapter, have a smaller circumference compared to an opposite end of the female threads. In that case, the male threads preferably are straight threads or tapered less than the female threads. Since the female threads are tapered, an end portion of the female threads will exert a force radially inwards onto the male threads when engaged with the male threads. According to a least one exemplary embodiment, the regulating means comprises a thermal actuator configured to control the valve spindle in dependence of an ambient temperature around the control device. The thermal actuator may comprise an actuator body, an expandable material element (typically made of liquid or gas) expandable inside the actuator body in dependence of the ambient temperature, and an actuator piston connected to the valve spindle and coupled to the expandable material element such that the actuator piston moves away from the actuator body when the expandable material element expands.

The control device with the thermal actuator may be provided with an adjustment mechanism configured to adjust how much the expandable material element have to move the actuator piston relative to the actuator body to close the valve. As an example, the control device may be provided with a handle rotatable relative to the valve arrangement, where the handle is manually rotatable between different positions that set respective amounts of movement. Rotation of the handle may move the actuator body between different positions relative to the valve arrangement, which in turn changes how much the expandable material element have to move the actuator piston relative to the actuator body to close the valve.

According to a least one exemplary embodiment, the kit comprises the adapter provided with the ridge. In that case, the control device may comprise an end arranged to abut the surface of the ridge of the adapter when the adapter becomes engaged with the control device via the threaded connection.

According to a third aspect of the present invention, there is provided a valve assembly comprising the kit and the valve arrangement according to the discussions above. The valve assembly is associated with the above-discussed advantages. The valve arrangement comprises: a valve body having a valve inlet and a valve outlet; a valve spindle movable relative to the valve body; and a valve comprising a seat and closing member movable relative to the seat for enabling a variable cross section of a passage between the valve inlet and the valve outlet to be changed, wherein the closing member is connected to the valve spindle.

According to a fourth aspect of the present invention, there is provided a fluid distribution system comprising the valve assembly according to the discussions above. The fluid distribution system is associated with the above-discussed advantages.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present invention will become apparent when studying the appended claims and the following description. The skilled person realizes that different features of the present invention may be combined to create embodiments other than those described in the following description without departing from the scope of the invention as defined in the claims.

### BRIEF DESCRIPTION OF THE DRAWINGS

With reference to the appended drawings, below follows a more detailed description of embodiments of the present invention cited as examples. In the drawings:
Figure 1 is schematic illustration of a valve assembly comprising a control device, an adapter, and valve arrangement;
Figure 2A-2B, 3A-3B, 4A-4B, and 5A-5B show different views of a valve assembly;
Figure 6A-6D show different views of the adapter of Figures 2A-5B; and
Figure 7 illustrates a fluid distribution system.

### DETAILED DESCRIPTION OF THE DRAWINGS

The present invention is described more fully below with reference to the accompanying drawings, in which certain aspects of the present invention are shown. The present invention may, however, be embodied in many different forms and should not be construed as limited to the embodiments and aspects set forth herein; rather, these embodiments are provided by way of example so that this disclosure will be thorough and complete, and will fully convey the scope of the present invention to those skilled in the art. Like numbers refer to like elements throughout the description.

It is to be understood that the present invention is not limited to the embodiments described herein and illustrated in the drawings; rather, the skilled person will recognize that many changes and modifications may be made within the scope of the appended claims.

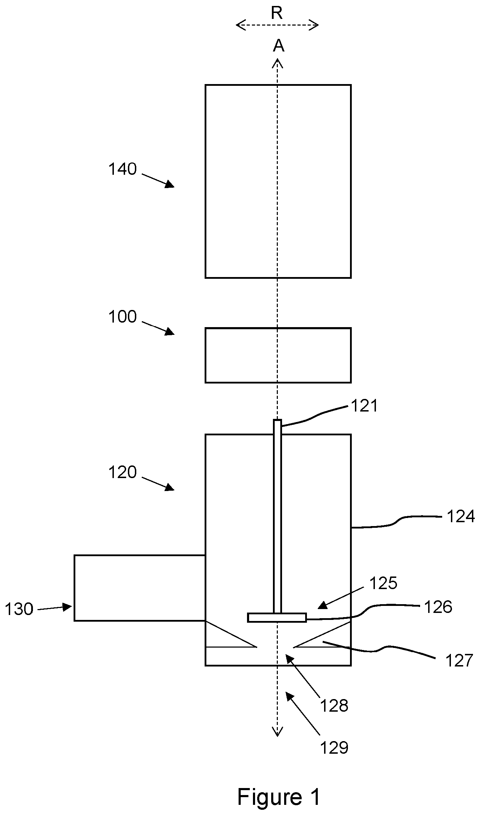

Figure 1 is a schematic illustration of an exploded view of a valve assembly comprising a control device 140, an adapter 100, and a valve arrangement 120. The valve arrangement 120 may, e.g., be a radiator valve arrangement. The valve arrangement 120 comprises a valve body 124 having a valve inlet 130 and a valve outlet 129, wherein the valve outlet 129 is arranged downstream of the valve inlet 130. The valve arrangement 120 is configured to control a fluid flow between the valve inlet 130 and the valve outlet 129 via a valve spindle 121 passing through the valve body 124. The valve spindle 121 may also be called a shaft. Furthermore, the valve spindle 121 is movable in an axial direction A and is configured to be actuated in the axial direction A to control the fluid flow thorough the valve arrangement 120. In particular, a position of the valve spindle 121 relative to the valve body 124 of the valve arrangement 120 determines an opening size of a valve 125 of the valve arrangement 120.

In Figure 1, the control of fluid flow is provided by the valve 125, which forms a linear valve. The valve 125 comprises a seat 127 and closing member 126 movable relative to the seat 127, wherein the closing member 126 is connected to the valve spindle 121. The closing member 126 is movable in the axial direction A. When the closing member 126 moves between different positions relative to the seat 127, a variable cross section of a passage between the valve inlet 130 and the valve outlet 129 is changed. In other words, as the closing member 126 moves closer to the seat 127, the amount of fluid flowing through the valve arrangement 120 decreases. As the closing member 126 moves away from the seat 127, the amount of fluid flowing through the valve arrangement 120 increases. The closing member 126 has a position in which the valve 125 is considered as fully open, i.e. providing for a largest defined opening area through the valve arrangement 120. Similarly, the closing member 126 has a position in which the valve 125 is considered as fully closed, i.e. completely blocking fluid from flowing through the valve arrangement 120 (or only allowing a small leakage flow). The opening degree of the valve 125 may, in at least some exemplary embodiments, be controlled in a step-less manner. However, in at least some exemplary embodiments, the opening degree may be discretely controlled in steps between the fully closed position and the fully opened position.

The control device 140 is configured to be attached to the valve arrangement 120 via the adapter 100 such that the valve spindle 121 of the valve arrangement 120 is connected to and controllable (i.e. actuable) by the control device 140. In Figure 1, the adapter 100 may be attached to the valve arrangement 120 by moving the adapter 100 downwards along the axial direction A, and the control device 140 may be attached to the valve arrangement 120 via the adapter 100 by moving the control device 140 downwards along the axial direction A. The adapter 100 and the control device 140 together form a kit. The control device 140 comprises regulating means (not shown) configured to control the valve spindle 121 when the control device 140 is attached to the valve arrangement 120 via the adapter 100. In other words, the regulating means are configured to actuate the valve spindle 121 relative to the valve body 124 when the control device 140 is attached to the valve arrangement 120 via the adapter 100.

The regulating means may comprise an electrically controllable actuator configured to regulate the position of the valve spindle 121. Alternatively, or in combination of, the regulating means may comprise movable element (such as a handle) configured to regulate the position of the valve spindle 121 in dependence of a position of the movable element relative to the valve arrangement 120. Alternatively, or in combination of, the regulating means comprises a thermal actuator configured to control the valve spindle 121 in dependence of an ambient temperature around the control device 140. If the regulating means comprises such a thermal actuator, the control device 140 may be called a thermostatic head.

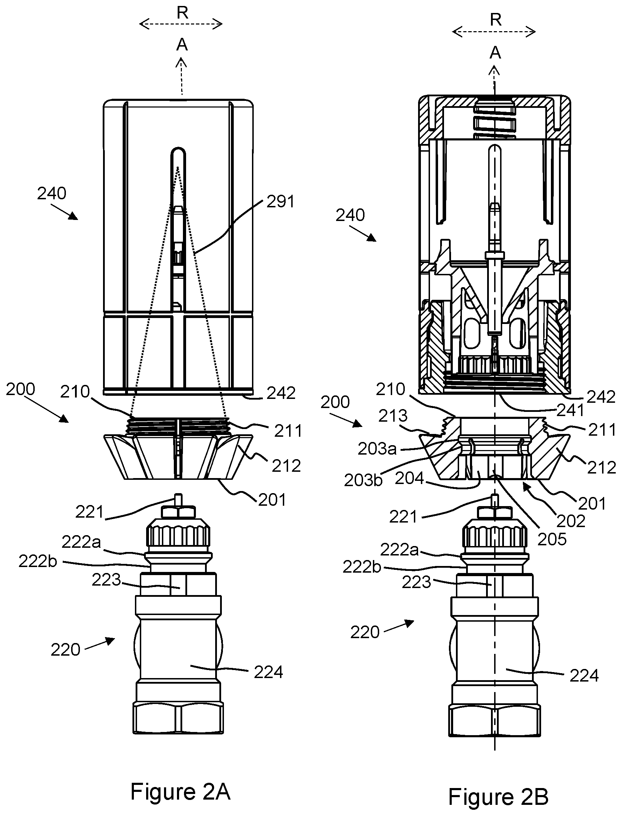

Figures 2A-2B, 3A-3B, 4A-4B, and 5A-5B show different views of a valve assembly comprising a control device 240, an adapter 200, and a valve arrangement 220.

In particular, Figures 2A-2B show an exploded view of the valve assembly. Figure 2B shows a cut of the control device 240 and the adapter 200 from the view of Figure 2A.

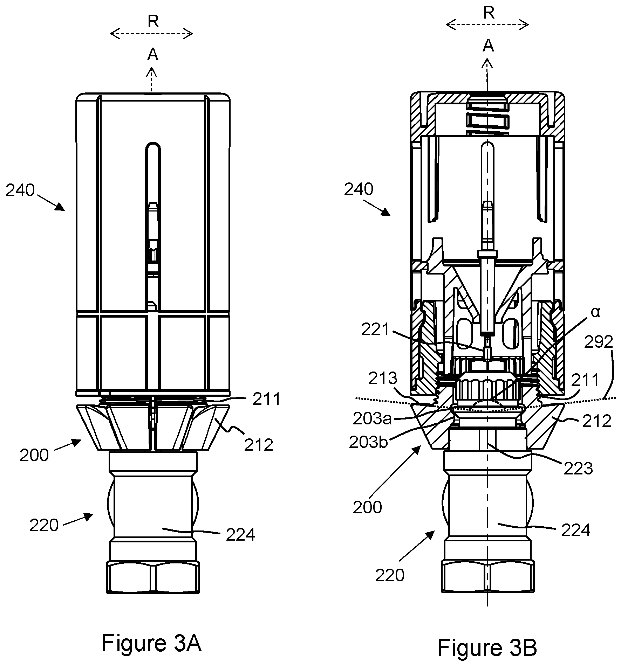

Figures 3A-3B show the valve assembly where the adapter 200 is connected to the valve arrangement 220, and where the control device 240 is about to engage the adapter 200. Figure 3B shows a cut of the control device 240 and the adapter 200 from the view of Figure 3A.

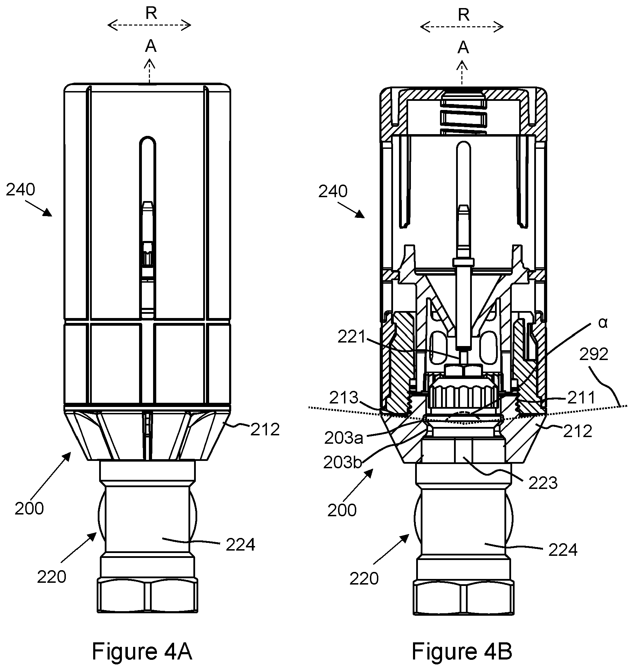

Figures 4A-4B show the valve assembly where the adapter 200 is connected to the valve arrangement 220, and where the control device 240 has engaged further with the adapter 200 compared to Figures 3A-3B. Figure 4B shows a cut of the control device 240 and the adapter 200 from the view of Figure 4A.

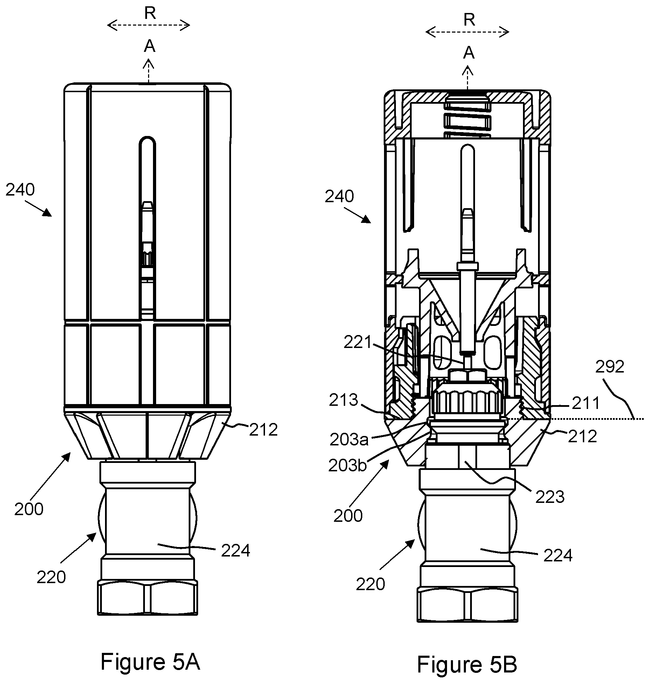

Figures 5A-4B show the valve assembly where the adapter 200 is connected to the valve arrangement 220, and where the control device 240 has fully engaged with the adapter 200. Figure 5B shows a cut of the control device 240 and the adapter 200 from the view of Figure 5A.

The valve arrangement 220 is a radiator valve arrangement. The valve arrangement 220 comprises a valve body 224. The internals of the valve arrangement 220 are not shown in the figures, but the valve arrangement 220 may operate under the same principles as the valve arrangement 120 of Figure 1. In particular, the valve arrangement 220 is configured to control a fluid flow through the valve arrangement via a valve spindle 221 passing through the valve body 224. Furthermore, the valve spindle 221 is movable in an axial direction A and is configured to be actuated in the axial direction A to control the fluid flow thorough the valve arrangement 220. In other words, a position of the valve spindle 221 relative to the valve body 224 of the valve arrangement 220 determines an opening size of a valve (not shown) of the valve arrangement 220.

The control device 240 is configured to be attached to the valve arrangement 220 via the adapter 200 such that the valve spindle 221 of the valve arrangement 220 is connected to and controllable by the control device 240. The adapter 200 and the control device 240 together form a kit. The kit and the valve arrangement 220 together form a valve assembly. The control device 240 comprises regulating means configured to control the valve spindle 221 when the control device 240 is attached to the valve arrangement 220 via the adapter 200. The regulating means comprises a thermal actuator (not shown) configured to control the valve spindle 221 in dependence of an ambient temperature around the control device 240. The thermal actuator comprises an actuator body, an expandable material element (typically made of liquid or gas) expandable inside the actuator body in dependence of the ambient temperature, and an actuator piston connected to the valve spindle 221 (when the control device 240 is attached to the valve arrangement 220 via the adapter 200) and coupled to the expandable material element such that the actuator piston moves away from the actuator body when the expandable material element expands.

The adapter 200 has a tubular shape extending in the axial direction A. A first axial end portion 201 of the adapter 200 is configured to engage with the valve arrangement 220 via a snap-fit connection. The first axial end portion 201 may be called a forward end portion. A second axial end portion 210 of the adapter 200 is at an opposite side of the adapter 200 with respect to the axial direction A. The second axial end portion 210 may be called a rearward end portion. A direction from the rearward end portion to the forward end portion along the axial direction A is called a forward direction, and a direction from the forward end portion to the rearward end portion along the axial direction A is called a rearward direction. The adapter 200 is configured to be attached to the valve arrangement 220 by moving the forward end portion (relative to the valve arrangement 220) in the forward direction onto the valve arrangement 220.

The snap-fit connection is formed by a first interlocking part 203a, 203b provided on an inside 202 of the adapter 200 engaging a second interlocking part 222a, 222b of the valve arrangement 220 such that the adapter 200 is retained to the valve arrangement 220. The first interlocking part 203a, 203b is movable in a resilient manner in a radial direction R such that, when the adapter 200 becomes engaged with the valve arrangement 220, the first interlocking part 203a, 203b expands in the radial direction R and thereafter snaps back in the radial direction R to form the snap-fit connection.

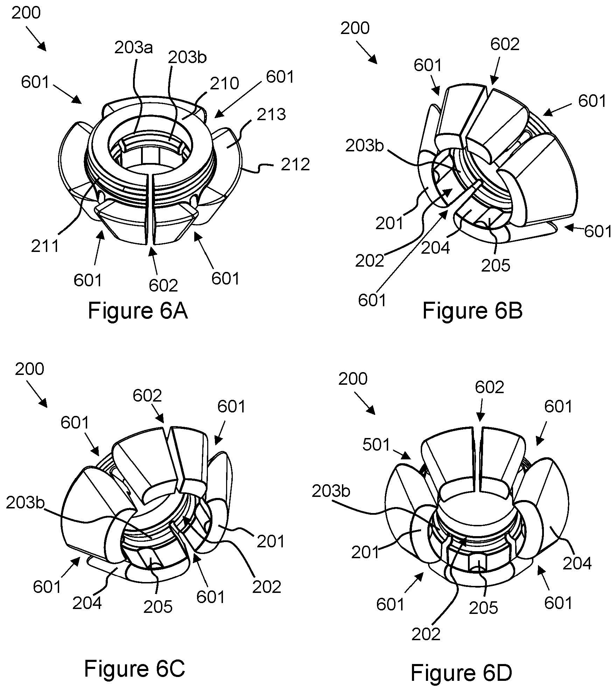

In Figure 2B, it can be seen that the second interlocking part comprises an annular protrusion 222a arranged circumferentially on the valve body 224 and arranged extending outwards in the radial direction R. Below the annular protrusion 222a of the valve arrangement 220 ("below" means in the forward direction relative to the annular protrusion 222a), an annular grove 222b is formed circumferentially on the valve body 224, which is also comprised in the second interlocking part. The first interlocking part comprises a section of an annular protrusion 203a arranged circumferentially on the inside 202 of the adapter 200 and arranged extending inwards in the radial direction R. The first interlocking part further comprises a section of an annular grove 203b formed circumferentially on the inside 202 of the adapter 200 arranged above the section of the annular protrusion 203a of the adapter 200. Here, "above" means in the rearward direction relative to the section of the annular protrusion 203a. The section of the annular protrusion 203b of the adapter 200 is snap-fitted into the annular grove 222b of the valve arrangement 220 and the section of the annular grove 203a of the adapter 200 is snap-fitted onto the annular protrusion 222a of the valve arrangement 220 when the adapter 200 is engaged with the valve arrangement 220 via the snap-fit connection. The first interlocking part 203a, 203b is discussed in more detail below in connection to Figures 6A-6D.

A second axial end portion 210 of the adapter 200 is configured to engage with the control device 240 via a threaded connection. In particular, the adapter 200 is configured to be attached to the control device 240 by moving the reward end portion (relative to the control device 240) in the forward direction onto the control device 240.The adapter 200 is provided with male threads 211 arranged circumferentially with respect to the axial direction A. The threaded connection is formed by the male threads 211 engaging female threads 241 of the control device 240 such that the adapter 200 is retained to the control device 240.

The male threads 211 are tapered towards the second end portion 210 of the adapter 200 to enable the first interlocking part 203a, 203b to become pressed inwards in the radial direction R when the adapter 200 becomes engaged with the control device 240 via the threaded connection and thereby preventing the first interlocking part 203a, 203b from expanding in the radial direction R when the adapter 200 is engaged with the control device 240 via the threaded connection.

As mentioned, the male threads 211 are tapered towards the second end portion 210 of the adapter 200. In other words, the male threads taper in the rearward direction. The tapering is illustrated by dashed lines 291 in Figure 2A. Due to the tapering, the circumference at a bottommost portion of the male threads 211 in the figure is larger than the circumference at an uppermost portion of the male threads 211 in the figure.

In Figure 2B, it can be seen that the female threads 241 of the control device 240 are arranged on an inside of the control device 240 in connection to an end 242 of the control device 240. It can further be seen that the female threads 241 are straight threads. Since the male threads 211 are tapered, an end portion of the female threads 241 will exert a force radially inwards onto the male threads 211 when engaged with the male threads 211. This force becomes larger the further the female threads 241 are engaged with the male threads 211, i.e., how many turns the female threads 241 has engaged with the male threads 211. By preventing the first interlocking part 203a, 203b from expanding in the radial direction R when the adapter 200 is engaged with the control device 240 via the threaded connection, the retention force of the snap-fit connection is increased when the adapter 200 is engaged with both the control device 240 and the valve arrangement 220 as compared with when the adapter 200 is engaged with the valve arrangement 220 but not the control device 240.

The adapter 200 is provided with a ridge 212 arranged circumferentially with respect to the axial direction A on an outside of the adapter 200. The ridge 212 comprises a surface 213 arranged to abut an end 242 of the control device 240 when the adapter 200 becomes engaged with the control device 240 via the threaded connection. In Figure 3B, the ridge 212 is arranged at a bottom end of the male threads 211 and the end 242 of the control device 240 is arranged at a bottom end of the female threads 241. In particular, the male threads 211 are arranged extending from an upmost end of the adapter 200 and extend all the way to the ridge 212. Other locations of the ridge 212 relative to the male threads 211 are also possible.

The surface 213 of the ridge 212 is frustoconical pointing towards the first axial end portion 201 of the adapter 200 and is associated with an apex angle α. In other words, the surface 213 of the ridge 212 is frustoconical pointing in the forward direction. The apex angle α is illustrated via dashed lines 292 in Figures 3B and 4B. In Figure 3B, the adapter 200 is connected to the valve arrangement 220, and the control device 240 is about to engage the adapter 200. In Figure 3B, the apex angle α remains unchanged compared to when the control device 240 is not in contact with the adapter 200.

The ridge 212 is arranged such that the apex angle α expands when the adapter 200 becomes engaged with the control device 240 via the threaded connection. In Figure 4B, the control device 240 has engaged further with the adapter 200 compared to Figure 3B, and the apex angle α remains substantially the same as in Figure 3B. In Figure 5B, the control device 240 has fully engaged with the adapter 200, and the apex angle has expanded to close to 180 degrees.

As can be seen from Figures 3B, 4B, and 5B, the expansion of the apex angle α results in the first interlocking part 203a, 203b being pressed inwards in the radial direction R when the adapter 200 becomes engaged with the control device 240 via the threaded connection. Consequently, the retention force of the snap-fit connection when the adapter 200 is engaged with both the control device 240 and the valve arrangement 220 is increased as compared with when the adapter 200 is engaged with the valve arrangement 220 but not the control device 240.

Furthermore, as can be seen from Figures 3B, 4B, and 5B, the tapering of the male threads 211 is reduced (i.e. the male threads 211 become closer to straight threads) as the control device 240 becomes more and more engaged with the adapter 200 when the adapter 200 is engaged with the valve arrangement 220.

Figures 6A-6D show different views of the adapter 200 of Figures 2A-5B. It can be seen that the adapter 200 is provided with a slit 602 extending between the first axial end portion 201 of the adapter 200 and the second end portion 210 of the adapter 200 to provide resilience to the first interlocking part 203a, 203b in the radial direction R. This slit 602 is arranged extending all the way from one end to the other end of the adapter 200. This slit 602 is arranged such that it reduces the genus of the adapter 200 by one as compared with the same adapter without the slit 602. In particular, the adapter 200 has a shape with zero through holes. The arrangement of the slit 602 provides resilience of the whole adapter 200, i.e., the whole adapter 200 can compress and expand radially in a resilient manner. Consequently, resilience is also provided to the first interlocking part 203a, 203b in the radial direction R.

Figures 6A-6D further show that the adapter 200 comprises four respective first interlocking parts 203. Each first interlocking part 203a, 203b is arranged on a protruding portion 204 of the adapter 200 extending in the axial direction A. The protruding portion 204 is configured to provide resilience to the first interlocking part 203a, 203b in the radial direction R. The male threads 211 are formed on the second axial end portion 210 (top part in Figure 6A) of the adapter 200 forming a C-shape together with the slit 602. The four protruding portions 204 extend in the forward direction from the end part. The four protruding portions 204 form openings 601 between each adjacent protruding portion 204. One of the protruding portions 204 is divided into two parts by the slit 602.

The adapter 200 comprises a first anti-rotational part 205 provided on the inside 202 of the adapter 200 configured to engage a second anti-rotational part 223 of the valve arrangement 220 such that the adapter 200 is rotationally locked to the valve arrangement 220 when the adapter 200 is engaged with the valve arrangement 220 via the snap-fit connection. In Figures 6A-6D, the adapter 200 comprises four respective first anti-rotational parts 205 in the form of part-cylindrical protrusions arranged on respective protruding portion 204. The second anti-rotational part 223 can be seen in Figure 2A, for example. The valve arrangement 220 comprises four respective second anti-rotational parts 223 arranged circumferentially on the valve body 224. Each second anti-rotational part 223 has a complementary shape to the first anti-rotational part 205, which in this case is a part-cylindrical recess.

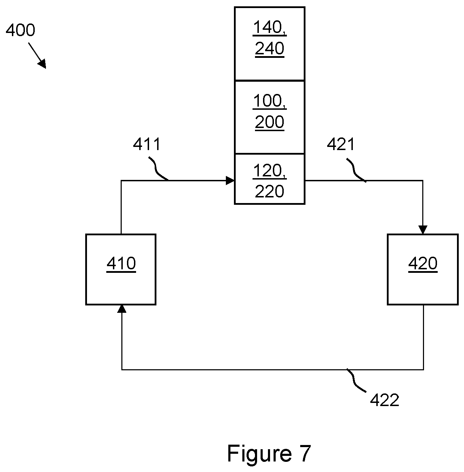

There is also disclosed herein a fluid distribution system 400 comprising a valve assembly according to the discussions above. Figure 7 shows a schematic illustration of an example fluid distribution system 400. The valve assembly comprises a control device 140, 240, an adapter 100, 200, and a valve arrangement 120, 220. The fluid distribution system 400 of Figure 7 comprises a fluid source 410, such as a liquid tank, and fluid consumption point 420, such as a radiator. Relative to the valve assembly, upstream 411 is between the fluid source 410 and the valve assembly and downstream 421 is between the valve assembly and the consumption point 420. Fluid is recirculated from the fluid consumption point 420 to the fluid source 410 via a return path 422.

## Claims

1. An adapter (100, 200) for attaching a control device (140, 240) to a valve arrangement (120, 220) such that a valve spindle (121, 221) of the valve arrangement (120, 220) is connected to and controllable by the control device (140, 240), the adapter (100, 200) comprising
a tubular shape extending in an axial direction (A), wherein a first axial end portion (201) of the adapter (100, 200) is configured to engage with the valve arrangement (120) via a snap-fit connection, and wherein a second axial end portion (210) of the adapter (100, 200) is configured to engage with the control device (140, 240) via a threaded connection,
wherein the snap-fit connection is formed by a first interlocking part (203a, 203b) provided on an inside (202) of the adapter (100, 200) engaging a second interlocking part (222a, 222b) of the valve arrangement (120, 220) such that the adapter (100, 200) is retained to the valve arrangement (120, 220), and wherein the first interlocking part (203a, 203b) is movable in a resilient manner in a radial direction (R) such that, when the adapter (100, 200) becomes engaged with the valve arrangement (120, 220), the first interlocking part (203a, 203b) expands in the radial direction (R) and thereafter snaps back in the radial direction (R) to form the snap-fit connection,
wherein the adapter (100, 200) is provided with male threads (211) arranged circumferentially with respect to the axial direction (A), and wherein the threaded connection is formed by the male threads (211) for engaging female threads (241) of the control device (140, 240) such that the adapter (100, 200) is retained to the control device (140, 240), the adapter (100,200) **characterised in that** the male threads (211) are tapered towards the second axial end portion (210) of the adapter (100, 200) to enable the first interlocking part (203a, 203b) to become pressed inwards in the radial direction (R) when the adapter (100, 200) becomes engaged with the control device (140, 240) via the threaded connection and thereby preventing the first interlocking part (203a, 203b) from expanding in the radial direction (R) when the adapter (100, 200) is engaged with the control device (140, 240) via the threaded connection.

2. The adapter (100, 200) according to claim 1, wherein the male threads (211) are configured to at least double a retention force of the snap-fit connection when the adapter (100, 200) is engaged with both the control device (140, 240) and the valve arrangement (120, 220) as compared with when the adapter (100, 200) is engaged with the valve arrangement but not the control device (140, 240).

3. The adapter (200) according to any previous claim, wherein the adapter (200) is provided with a ridge (212) arranged circumferentially with respect to the axial direction (A) on an outside of the adapter (200), and wherein the ridge (212) comprises a surface (213) arranged to abut an end (242) of the control device (240) when the adapter (200) becomes engaged with the control device (240) via the threaded connection.

4. The adapter (200) according to claim 3, wherein the surface (213) is frustoconical pointing towards the first axial end portion (201) of the adapter (200) and is associated with an apex angle (α), and wherein the ridge (212) is arranged such that the apex angle (α) expands when the adapter (200) becomes engaged with the control device (240) via the threaded connection.

5. The adapter (200) according to any previous claim, wherein the first interlocking part (203a, 203b) is arranged on a protruding portion (204) of the adapter (200) extending in the axial direction (A) configured to provide resilience to the first interlocking part (203a, 203b) in the radial direction (R).

6. The adapter (200) according to any previous claim, comprising a first anti-rotational part (205) provided on the inside (202) of the adapter (200) configured to engage a second anti-rotational part (223) of the valve arrangement (220) such that the adapter (200) is rotationally locked to the valve arrangement (220) when the adapter (200) is engaged with the valve arrangement (220) via the snap-fit connection.

7. The adapter (200) according to any previous claim, wherein the adapter (200) is provided with a slit (602) extending between the first axial end portion (201) of the adapter (200) and the second axial end portion (210) of the adapter (200) to provide resilience to the first interlocking part (203a, 203b) in the radial direction (R).

8. A kit comprising a control device (140, 240) and an adapter (100, 200) for attaching the control device (140, 240) to a valve arrangement (120, 220) such that a valve spindle (121, 221) of the valve arrangement (120, 220) is connected to and controllable by the control device (140, 240), wherein the control device (140, 240) comprises regulating means configured to control the valve spindle (121, 221) when the control device (140, 240) is attached to the valve arrangement (120, 220) via the adapter (100, 200), the adapter (100, 200) comprising
a tubular shape extending in an axial direction (A), wherein a first axial end portion (201) of the adapter (100, 200) is configured to engage with the valve arrangement (120) via a snap-fit connection, and wherein a second axial end portion (210) of the adapter (100, 200) is configured to engage with the control device (140, 240) via a threaded connection,
wherein the snap-fit connection is formed by a first interlocking part (203a, 203b) provided on an inside (202) of the adapter (100, 200) engaging a second interlocking part (222a, 222b) of the valve arrangement (120, 220) such that the adapter (100, 200) is retained to the valve arrangement (120, 220), and wherein the first interlocking part (203a, 203b) is movable in a resilient manner in a radial direction (R) such that, when the adapter (100, 200) becomes engaged with the valve arrangement (120, 220), the first interlocking part (203a, 203b) expands in the radial direction (R) and thereafter snaps back in the radial direction (R) to form the snap-fit connection,
wherein the adapter (100, 200) is provided with male threads (211) arranged circumferentially with respect to the axial direction (A), and wherein the threaded connection is formed by the male threads (211) engaging female threads (241) of the control device (140, 240) such that the adapter (100, 200) is retained to the control device (140, 240), and wherein the male threads (211) and/or the female threads (241) are tapered with respect to the axial direction (A), and wherein the male threads (211) are configured to engage the female threads (241) of the control device (240) such that the first interlocking part (203a, 203b) is pressed inwards in the radial direction (R) when the adapter (200) becomes engaged with the control device (240) via the threaded connection and thereby preventing the first interlocking part (203a, 203b) from expanding in the radial direction (R) when the adapter (100, 200) is engaged with the control device (140, 240) via the threaded connection.

9. The kit according to claim 8, wherein one the male threads (211) and the female threads (241) are tapered, and the other one of the male threads (211) and female threads (241) are straight threads.

10. The kit according to claim 8, wherein the adapter (100, 200) is the adapter (100, 200) according to any of claims 1-7.

11. The kit according to claim 10, wherein the female threads (241) are straight threads.

12. The kit according to any of claims 8-11, wherein the regulating means comprises a thermal actuator configured to control the valve spindle (221) in dependence of an ambient temperature around the control device (140, 240).

13. The kit according to claim 10 when dependent on claim 3 or 4, wherein control device (240) comprises an end (242) arranged to abut the surface (213) of the ridge (212) of the adapter (200) when the adapter (200) becomes engaged with the control device (240) via the threaded connection.

14. A valve assembly comprising a valve arrangement (120, 220) and the kit according to any of claims 8-13, wherein the valve arrangement (120, 220) comprises: a valve body (124, 224) having a valve inlet (130) and a valve outlet (129); a valve spindle (121, 221) movable relative to the valve body (124, 224); and a valve (125) comprising a seat (127) and closing member (126) movable relative to the seat (127) for enabling a variable cross section of a passage between the valve inlet (130) and the valve outlet (129) to be changed, wherein the closing member is connected to the valve spindle (121, 221).

15. A fluid distribution system (400) comprising the valve assembly according to claim 14.

## Patentansprüche

1. Adapter (100, 200) zur Befestigung einer Steuerungsvorrichtung (140, 240) an einer Ventilanordnung (120, 220), sodass eine Ventilspindel (121, 221) der Ventilanordnung (120, 220) mit der Steuerungsvorrichtung (140, 240) verbunden und durch diese steuerbar ist, wobei der Adapter (100, 200) Folgendes umfasst:
eine rohrförmige Form, die sich in einer axialen Richtung (A) erstreckt, wobei ein erster axialer Endabschnitt (201) des Adapters (100, 200) dazu konfiguriert ist, mit der Ventilanordnung (120) über eine Schnappverbindung in Eingriff zu treten, und wobei ein zweiter axialer Endabschnitt (210) des Adapters (100, 200) dazu konfiguriert ist, mit der Steuerungsvorrichtung (140, 240) über eine Gewindeverbindung in Eingriff zu treten,
wobei die Schnappverbindung dadurch gebildet ist, dass ein erstes ineinandergreifendes Teil (203a, 203b), das an einer Innenseite (202) des Adapters (100, 200) bereitgestellt ist, ein zweites ineinandergreifendes Teil (222a, 222b) der Ventilanordnung (120, 220) in Eingriff nimmt, sodass der Adapter (100, 200) an der Ventilanordnung (120, 220) zurückgehalten wird, und wobei das erste ineinandergreifende Teil (203a, 203b) auf nachgiebige Weise in einer radialen Richtung (R) bewegbar ist, sodass, wenn der Adapter (100, 200) mit der Ventilanordnung (120, 220) in Eingriff tritt, sich das erste ineinandergreifende Teil (203a, 203b) in der radialen Richtung (R) erweitert und danach in der radialen Richtung (R) zurückschnappt, um die Schnappverbindung zu bilden,
wobei der Adapter (100, 200) mit einem Außengewinde (211) versehen ist, das umlaufend in Bezug auf die axiale Richtung (A) angeordnet ist, und wobei die Gewindeverbindung durch die Außengewinde (211) zum Ineingriffnehmen eines Innengewindes (241) der Steuerungsvorrichtung (140, 240) gebildet ist, sodass der Adapter (100, 200) an der Steuerungsvorrichtung (140, 240) zurückgehalten wird, wobei der Adapter (100, 200) **dadurch gekennzeichnet ist, dass** das Außengewinde (211) in Richtung des zweiten axialen Endabschnitts (210) des Adapters (100, 200) konisch ist, um zu ermöglichen, dass das erste ineinandergreifende Teil (203a, 203b) in der radialen Richtung (R) nach innen gepresst wird, wenn der Adapter (100, 200) mit der Steuerungsvorrichtung (140, 240) über die Gewindeverbindung in Eingriff tritt, und dadurch verhindert wird, dass sich das erste ineinandergreifende Teil (203a, 203b) in der radialen Richtung (R) erweitert, wenn der Adapter (100, 200) mit der Steuerungsvorrichtung (140, 240) über die Gewindeverbindung in Eingriff steht.

2. Adapter (100, 200) nach Anspruch 1, wobei das Außengewinde (211) dazu konfiguriert ist, eine Rückhaltekraft der Schnappverbindung, wenn der Adapter (100, 200) mit sowohl der Steuerungsvorrichtung (140, 240) als auch der Ventilanordnung (120, 220) in Eingriff steht, im Vergleich dazu, wenn der Adapter (100, 200) mit der Ventilanordnung, aber nicht der Steuerungsvorrichtung (140, 240) in Eingriff steht, mindestens zu verdoppeln.

3. Adapter (200) nach einem vorhergehenden Anspruch, wobei der Adapter (200) mit einem Grat (212) versehen ist, der umlaufend in Bezug auf die axiale Richtung (A) an einer Außenseite des Adapters (200) angeordnet ist, und wobei der Grat (212) eine Fläche (213) umfasst, die dazu angeordnet ist, an ein Ende (242) der Steuerungsvorrichtung (240) anzugrenzen, wenn der Adapter (200) mit der Steuerungsvorrichtung (240) über die Gewindeverbindung in Eingriff tritt.

4. Adapter (200) nach Anspruch 3, wobei die Fläche (213) kegelstumpfförmig ist, in Richtung des ersten axialen Endabschnitts (201) des Adapters (200) zeigt und einem Öffnungswinkel (α) zugeordnet ist und wobei der Grat (212) so angeordnet ist, dass sich der Öffnungswinkel (α) erweitert, wenn der Adapter (200) mit der Steuerungsvorrichtung (240) über die Gewindeverbindung in Eingriff tritt.

5. Adapter (200) nach einem vorhergehenden Anspruch, wobei das erste ineinandergreifende Teil (203a, 203b) an einem hervorstehenden Abschnitt (204) des Adapters (200) angeordnet ist, der sich in der axialen Richtung (A) erstreckt und dazu konfiguriert ist, dem ersten ineinandergreifenden Teil (203a, 203b) in der radialen Richtung (R) Nachgiebigkeit bereitzustellen.

6. Adapter (200) nach einem vorhergehenden Anspruch, umfassend ein erstes Drehsicherungsteil (205), das an der Innenseite (202) des Adapters (200) bereitgestellt ist und dazu konfiguriert ist, ein zweites Drehsicherungsteil (223) der Ventilanordnung (220) in Eingriff zu nehmen, sodass der Adapter (200) mit der Ventilanordnung (220) drehverriegelt ist, wenn der Adapter (200) mit der Ventilanordnung (220) über die Schnappverbindung in Eingriff steht.

7. Adapter (200) nach einem vorhergehenden Anspruch, wobei der Adapter (200) mit einem Schlitz (602) versehen ist, der sich zwischen dem ersten axialen Endabschnitt (201) des Adapters (200) und dem zweiten axialen Endabschnitt (210) des Adapters (200) erstreckt, um dem ersten ineinandergreifenden Teil (203a, 203b) in der radialen Richtung (R) Nachgiebigkeit bereitzustellen.

8. Kit, umfassend eine Steuerungsvorrichtung (140, 240) und einen Adapter (100, 200) zur Befestigung der Steuerungsvorrichtung (140, 240) an einer Ventilanordnung (120, 220), sodass eine Ventilspindel (121, 221) der Ventilanordnung (120, 220) mit der Steuerungsvorrichtung (140, 240) verbunden und durch diese steuerbar ist, wobei die Steuerungsvorrichtung (140, 240) ein Regelungsmittel umfasst, das dazu konfiguriert ist, die Ventilspindel (121, 221) zu steuern, wenn die Steuerungsvorrichtung (140, 240) über den Adapter (100, 200) an der Ventilanordnung (120, 220) befestigt ist, wobei der Adapter (100, 200) Folgendes umfasst:
eine rohrförmige Form, die sich in einer axialen Richtung (A) erstreckt, wobei ein erster axialer Endabschnitt (201) des Adapters (100, 200) dazu konfiguriert ist, mit der Ventilanordnung (120) über eine Schnappverbindung in Eingriff zu treten, und wobei ein zweiter axialer Endabschnitt (210) des Adapters (100, 200) dazu konfiguriert ist, mit der Steuerungsvorrichtung (140, 240) über eine Gewindeverbindung in Eingriff zu treten,
wobei die Schnappverbindung dadurch gebildet ist, dass ein erstes ineinandergreifendes Teil (203a, 203b), das an einer Innenseite (202) des Adapters (100, 200) bereitgestellt ist, ein zweites ineinandergreifendes Teil (222a, 222b) der Ventilanordnung (120, 220) in Eingriff nimmt, sodass der Adapter (100, 200) an der Ventilanordnung (120, 220) zurückgehalten wird, und wobei das erste ineinandergreifende Teil (203a, 203b) auf nachgiebige Weise in einer radialen Richtung (R) bewegbar ist, sodass, wenn der Adapter (100, 200) mit der Ventilanordnung (120, 220) in Eingriff tritt, sich das erste ineinandergreifende Teil (203a, 203b) in der radialen Richtung (R) erweitert und danach in der radialen Richtung (R) zurückschnappt, um die Schnappverbindung zu bilden,
wobei der Adapter (100, 200) mit einem Außengewinde (211) versehen ist, das umlaufend in Bezug auf die axiale Richtung (A) angeordnet ist, und wobei die Gewindeverbindung dadurch gebildet ist, dass das Außengewinde (211) ein Innengewinde (241) der Steuerungsvorrichtung (140, 240) in Eingriff nimmt, sodass der Adapter (100, 200) an der Steuerungsvorrichtung (140, 240) zurückgehalten wird, und wobei das Außengewinde (211) und/oder das Innengewinde (241) in Bezug auf die axiale Richtung (A) konisch sind und wobei das Außengewinde (211) dazu konfiguriert ist, das Innengewinde (241) der Steuerungsvorrichtung (240) in Eingriff zu nehmen, sodass das erste ineinandergreifende Teil (203a, 203b) in der radialen Richtung (R) nach innen gepresst wird, wenn der Adapter (200) mit der Steuerungsvorrichtung (240) über die Gewindeverbindung in Eingriff tritt, und dadurch verhindert wird, dass sich das erste ineinandergreifende Teil (203a, 203b) in der radialen Richtung (R) erweitert, wenn der Adapter (100, 200) mit der Steuerungsvorrichtung (140, 240) über die Gewindeverbindung in Eingriff steht.

9. Kit nach Anspruch 8, wobei eines des Außengewindes (211) und des Innengewindes (241) konisch ist und das andere des Außengewindes (211) und des Innengewindes (241) ein zylindrisches Gewinde ist.

10. Kit nach Anspruch 8, wobei der Adapter (100, 200) der Adapter (100, 200) nach einem der Ansprüche 1-7 ist.

11. Kit nach Anspruch 10, wobei das Innengewinde (241) ein zylindrisches Gewinde ist.

12. Kit nach einem der Ansprüche 8-11, wobei das Regelungsmittel einen thermischen Aktor umfasst, der dazu konfiguriert ist, die Ventilspindel (221) in Abhängigkeit von einer Umgebungstemperatur um die Steuerungsvorrichtung (140, 240) herum zu steuern.

13. Kit nach Anspruch 10, wenn abhängig von Anspruch 3 oder 4, wobei die Steuerungsvorrichtung (240) ein Ende (242) umfasst, das dazu angeordnet ist, an die Fläche (213) des Grats (212) des Adapters (200) anzugrenzen, wenn der Adapter (200) mit der Steuerungsvorrichtung (240) über die Gewindeverbindung in Eingriff tritt.

14. Ventilbaugruppe, umfassend eine Ventilanordnung (120, 220) und das Kit nach einem der Ansprüche 8-13, wobei die Ventilanordnung (120, 220) Folgendes umfasst: einen Ventilkörper (124, 224), der einen Ventileinlass (130) und einen Ventilauslass (129) aufweist; eine Ventilspindel (121, 221), die relativ zu dem Ventilkörper (124, 224) bewegbar ist; und ein Ventil (125), das einen Sitz (127) und ein Verschlusselement (126) umfasst, das relativ zu dem Sitz (127) bewegbar ist, um zu ermöglichen, dass ein variabler Querschnitt eines Durchgangs zwischen dem Ventileinlass (130) und dem Ventilauslass (129) geändert wird, wobei das Verschlusselement mit der Ventilspindel (121, 221) verbunden ist.

15. Fluidverteilungssystem (400), umfassend die Ventilbaugruppe nach Anspruch 14.

## Revendications

1. Adaptateur (100, 200) pour fixer un dispositif de commande (140, 240) à un agencement de soupape (120, 220) de telle sorte qu'une tige de soupape (121, 221) de l'agencement de soupape (120, 220) soit connectée au dispositif de commande (140, 240) et puisse être commandée par celui-ci, l'adaptateur (100, 200) comprenant
une forme tubulaire s'étendant dans une direction axiale (A), dans lequel une première partie d'extrémité axiale (201) de l'adaptateur (100, 200) est configurée pour venir en prise avec l'agencement de soupape (120) via une connexion à encliquetage, et dans lequel une seconde partie d'extrémité axiale (210) de l'adaptateur (100, 200) est configurée pour venir en prise avec le dispositif de commande (140, 240) via une connexion filetée, dans lequel la connexion à encliquetage est formée par une première partie de verrouillage (203a, 203b) disposée à l'intérieur (202) de l'adaptateur (100, 200) venant en prise avec une seconde partie de verrouillage (222a, 222b) de l'agencement de soupape (120, 220) de sorte que l'adaptateur (100, 200) soit maintenu sur l'agencement de soupape (120, 220), et dans lequel la première partie de verrouillage (203a, 203b) est mobile élastiquement dans la direction radiale (R) de sorte que, lorsque l'adaptateur (100, 200) est en prise avec l'agencement de soupape (120, 220), la première partie de verrouillage (203a, 203b) se dilate dans la direction radiale (R) puis se réenclenche dans la direction radiale (R) pour former la connexion à encliquetage,
dans lequel l'adaptateur (100, 200) est pourvu de filetages mâles (211) disposés circonférentiellement par rapport à la direction axiale (A), et dans lequel la connexion filetée est formée par les filetages mâles (211) pour venir en prise avec les filetages femelles (241) du dispositif de commande (140, 240) de telle sorte que l'adaptateur (100, 200) est retenu sur le dispositif de commande (140, 240), l'adaptateur (100, 200) **caractérisé en ce que** les filetages mâles (211) sont coniques vers la seconde partie d'extrémité axiale (210) de l'adaptateur (100, 200) pour permettre à la première partie de verrouillage (203a, 203b) d'être pressée vers l'intérieur dans la direction radiale (R) lorsque l'adaptateur (100, 200) vient en prise avec le dispositif de commande (140, 240) via la connexion filetée et empêchant ainsi la première partie de verrouillage (203a, 203b) de se dilater dans la direction radiale (R) lorsque l'adaptateur (100, 200) est en prise avec le dispositif de commande (140, 240) via la connexion filetée.

2. Adaptateur (100, 200) selon la revendication 1, dans lequel les filetages mâles (211) sont configurés pour au moins doubler une force de rétention de la connexion à encliquetage lorsque l'adaptateur (100, 200) est en prise à la fois avec le dispositif de commande (140, 240) et l'agencement de soupape (120, 220) par rapport à lorsque l'adaptateur (100, 200) est en prise avec l'agencement de soupape mais pas avec le dispositif de commande (140, 240).

3. Adaptateur (200) selon l'une quelconque des revendications précédentes, dans lequel l'adaptateur (200) est pourvu d'une crête (212) disposée circonférentiellement par rapport à la direction axiale (A) sur un extérieur de l'adaptateur (200), et dans lequel la crête (212) comprend une surface (213) disposée pour venir en butée contre une extrémité (242) du dispositif de commande (240) lorsque l'adaptateur (200) vient en prise avec le dispositif de commande (240) via la connexion filetée.

4. Adaptateur (200) selon la revendication 3, dans lequel la surface (213) est tronconique pointant vers la première partie d'extrémité axiale (201) de l'adaptateur (200) et est associée à un angle de sommet (α), et dans lequel la crête (212) est agencée de telle sorte que l'angle de sommet (α) s'élargit lorsque l'adaptateur (200) vient en prise avec le dispositif de commande (240) via la connexion filetée.

5. Adaptateur (200) selon l'une quelconque des revendications précédentes, dans lequel la première partie de verrouillage (203a, 203b) est disposée sur une partie saillante (204) de l'adaptateur (200) s'étendant dans la direction axiale (A) configurée pour fournir une élasticité à la première partie de verrouillage (203a, 203b) dans la direction radiale (R).

6. Adaptateur (200) selon l'une quelconque des revendications précédentes, comprenant une première partie anti-rotation (205) prévue à l'intérieur (202) de l'adaptateur (200) configurée pour venir en prise avec une seconde partie anti-rotation (223) de l'agencement de soupape (220) de telle sorte que l'adaptateur (200) est verrouillé en rotation sur l'agencement de soupape (220) lorsque l'adaptateur (200) est en prise avec l'agencement de soupape (220) via la connexion à encliquetage.

7. Adaptateur (200) selon l'une quelconque des revendications précédentes, dans lequel l'adaptateur (200) est pourvu d'une fente (602) s'étendant entre la première partie d'extrémité axiale (201) de l'adaptateur (200) et la seconde partie d'extrémité axiale (210) de l'adaptateur (200) pour fournir une élasticité à la première partie de verrouillage (203a, 203b) dans la direction radiale (R).

8. Kit comprenant un dispositif de commande (140, 240) et un adaptateur (100, 200) permettant de fixer le dispositif de commande (140, 240) à un agencement de soupape (120, 220) de telle sorte qu'une tige de soupape (121, 221) de l'agencement de soupape (120, 220) soit connectée au dispositif de commande (140, 240) et puisse être commandée par celui-ci, dans lequel le dispositif de commande (140, 240) comprend un moyen de régulation configuré pour commander la tige de soupape (121, 221) lorsque le dispositif de commande (140, 240) est fixé à l'agencement de soupape (120, 220) via l'adaptateur (100, 200), l'adaptateur (100, 200) comprenant
une forme tubulaire s'étendant dans une direction axiale (A), dans lequel une première partie d'extrémité axiale (201) de l'adaptateur (100, 200) est configurée pour venir en prise avec l'agencement de soupape (120) via une connexion à encliquetage, et dans lequel une seconde partie d'extrémité axiale (210) de l'adaptateur (100, 200) est configurée pour venir en prise avec le dispositif de commande (140, 240) via une connexion filetée, dans lequel la connexion à encliquetage est formée par une première partie de verrouillage (203a, 203b) disposée à l'intérieur (202) de l'adaptateur (100, 200) et venant en prise avec une seconde partie de verrouillage (222a, 222b) de l'agencement de soupape (120, 220) de sorte que l'adaptateur (100, 200) soit maintenu sur l'agencement de soupape (120, 220), et dans lequel la première partie de verrouillage (203a, 203b) est mobile élastiquement dans la direction radiale (R) de sorte que, lorsque l'adaptateur (100, 200) est en prise avec l'agencement de soupape (120, 220), la première partie de verrouillage (203a, 203b) se dilate dans la direction radiale (R) puis se réenclenche dans la direction radiale (R) pour former la connexion à encliquetage,
dans lequel l'adaptateur (100, 200) est pourvu de filetages mâles (211) disposés circonférentiellement par rapport à la direction axiale (A), et dans lequel la connexion filetée est formée par les filetages mâles (211) venant en prise avec les filetages femelles (241) du dispositif de commande (140, 240), de sorte que l'adaptateur (100, 200) est maintenu sur le dispositif de commande (140, 240), et dans lequel les filetages mâles (211) et/ou les filetages femelles (241) sont coniques par rapport à la direction axiale (A), et dans lequel les filetages mâles (211) sont configurés pour venir en prise avec les filetages femelles (241) du dispositif de commande (240), de sorte que la première partie de verrouillage (203a, 203b) est pressée vers l'intérieur dans la direction radiale (R) lorsque l'adaptateur (200) est en prise avec le dispositif de commande (240) via la connexion filetée et empêchant ainsi la première partie de verrouillage (203a, 203b) de s'étendre dans la direction radiale (R) lorsque l'adaptateur (100, 200) est en prise avec le dispositif de commande (140, 240) via la connexion filetée.

9. Kit selon la revendication 8, dans lequel l'un des filetages mâles (211) et des filetages femelles (241) sont coniques, et l'autre des filetages mâles (211) et des filetages femelles (241) sont des filetages droits.

10. Kit selon la revendication 8, dans lequel l'adaptateur (100, 200) est l'adaptateur (100, 200) selon l'une quelconque des revendications 1 à 7.

11. Kit selon la revendication 10, dans lequel les filetages femelles (241) sont des filetages droits.

12. Kit selon l'une quelconque des revendications 8 à 11, dans lequel le moyen de régulation comprend un actionneur thermique configuré pour commander la tige de soupape (221) en fonction d'une température ambiante autour du dispositif de commande (140, 240).

13. Kit selon la revendication 10 lorsqu'elle dépend de la revendication 3 ou 4, dans lequel le dispositif de commande (240) comprend une extrémité (242) agencée pour venir en butée contre la surface (213) de la crête (212) de l'adaptateur (200) lorsque l'adaptateur (200) vient en prise avec le dispositif de commande (240) via la connexion filetée.

14. Ensemble de soupape comprenant un agencement de soupape (120, 220) et le kit selon l'une quelconque des revendications 8 à 13, dans lequel l'agencement de soupape (120, 220) comprend : un corps de soupape (124, 224) ayant une entrée de soupape (130) et une sortie de soupape (129) ; une tige de soupape (121, 221) mobile par rapport au corps de soupape (124, 224) ; et une soupape (125) comprenant un siège (127) et un élément de fermeture (126) mobile par rapport au siège (127) pour permettre de modifier une section transversale variable d'un passage entre l'entrée de soupape (130) et la sortie de soupape (129), l'élément de fermeture étant relié à la tige de soupape (121, 221).

15. Système de distribution de fluide (400) comprenant l'agencement de soupape selon la revendication 14.
